# EUROPÄISCHE PATENTANMELDUNG

(11) **EP 1 329 671 A2**
(43) Veröffentlichungstag der Anmeldung: **23.07.2003**
(21) Anmeldenummer: 02026219.2
(22) Anmeldetag: 26.11.2002
(51) Int. Cl.: F24D 17/00

(54) **Brauchwasser-Zirkulationssystem**

(30) Priorität: 18.01.2002 DE 10201750
(71) Anmelder: ROBERT BOSCH GMBH, 70442 Stuttgart (DE)
(72) Erfinder: Reisser, Berni, 73274 Notzingen (DE)

(57) **Zusammenfassung**

Die Erfindung betrifft ein Brauchwasser-Zirkulationssystem, bei dem ein mit einer Nachheizung versehener Brauchwasserspeicher über eine Vorlaufleitung eine Anzahl von Warmwasser-Verbraucher mit Warmwasser versorgt, das über eine Rücklaufleitung und eine Zirkulationspumpe zum Brauchwasserspeicher zurück in Umwälzung bringbar ist, wobei die Zirkulationspumpe mittels eines in den Brauchwasser-Kreislauf einbezogenen Strömungswächters ansteuerbar ist. Ist nach der Erfindung vorgesehen, dass durch kurzzeitige Warmwasserentnahme eines beliebigen Verbrauchers der Strömungswächter anspricht und für eine fest vorgegebene oder einstellbare Zeit die Einschaltung der Zirkulationspumpe veranlasst, dann ist eine Fernsteuerung der Zirkulationspumpe ohne Leitungen von jedem Verbraucher aus durch kurzzeitige Entnahme von Brauchwasser durchführbar und das Zirkulationssystem auf die gewünschte Temperatur für den anschließenden Gebrauch eingestellt.

## Beschreibung

Die Erfindung betrifft ein Brauchwasser-Zirkulationssystem, bei dem ein mit einer Nachheizung versehener Brauchwasserspeicher über eine Vorlaufleitung eine Anzahl von Warmwasser-Verbraucher mit Warmwasser versorgt, das über eine Rücklaufleitung und eine Zirkulationspumpe zum Brauchwasserspeicher zurück in Umwälzung bringbar ist, wobei die Zirkulationspumpe mittels eines in den Brauchwasser-Kreislauf einbezogenen Strömungswächters ansteuerbar ist.

### Stand der Technik

Ein Brauchwasser-Zirkulationssystem dieser Art ist aus der DE 299 00 274 U1 und der DE 32 42 491 C2 entnehmbar. Dabei wird bei Bedarf von Warmwasser an einem Verbraucher die Zirkulationspumpe eingeschaltet und zumindest für die Dauer der Warmwasserentnahme im Betrieb gehalten.

Die Zirkulationspumpe darüber hinaus noch von der im Brauchwasser-Kreislauf herrschenden Temperatur des Brauchwassers abhängig gemacht werden. Mit dieser Steuerung der Zirkulationspumpe wird gegenüber einer Steuerung mittels Zeitschaltuhr eine gewisse Energieeinsparung erreicht, es lässt sich jedoch nicht vermeiden, dass zu Beginn der Warmwasserentnahme am Verbraucher zunächst eine Menge kälteren Wassers anfällt, die von der Länge der Vorlaufleitung vom Heizraum bis zum Verbraucher abhängig ist. Dies wird als Nachteil empfunden und bietet nicht den heute gewünschten Komfort, dass mit der Benutzung sofort Warmwasser der vorgegebenen oder voreingestellten Temperatur des Brauchwasserspeichers am Verbraucher zur Verfügung steht.

Es ist auch schon versucht worden, diese Nachteile dadurch zu vermeiden, dass im Badezimmer, in der Küche oder anderen Räumen Schalter oder Schaltuhren angebracht werden, über die der Benutzer bei Bedarf der Warmwasserentnahme an einem Verbraucher die Zirkulationspumpe für eine gewisse Zeit in Betrieb setzen kann. Diese Lösung erfordert einen erheblichen Montageaufwand, ist nicht einfach nachrüstbar und verursacht nennenswerte Kosten.

Es ist Aufgabe der Erfindung, ein Brauchwasser-Zirkulationssystem der eingangs erwähnten Art zu schaffen, bei dem auf einfache und leicht nachrüstbare Art von verschiedenen Stellen aus eine vorbereitende Einschaltung der Zirkulationspumpe veranlasst werden kann, so dass bei geringem Energiebedarf der Zirkulationspumpe und geringem Wärmeverlust im Brauchwasser-Kreislauf während der Ruhephasen für den Benutzer kurz danach sofort das Warmwasser mit der gewünschten und vorbestimmten Temperatur zur Verfügung steht.

### Vorteile der Erfindung

Diese Aufgabe wird nach der Erfindung dadurch gelöst, dass durch kurzzeitige Warmwasserentnahme eines beliebigen Verbrauchers der Strömungswächter anspricht und für eine fest vorgegebene oder einstellbare Zeit die Einschaltung der Zirkulationspumpe veranlasst.

Diese Ausgestaltung nützt den Brauchwasser-Kreislauf selbst zur vorbereitenden kurzzeitigen Einschaltung der Zirkulationspumpe aus, so dass kurz danach an jedem beliebigen Verbraucher sofort das Warmwasser mit der gewünschten und voreingestellten Temperatur zur Verfügung steht. Umfangreiche und kostengünstige Leitungsführungen für in der Wohnung verteilte Schalter sind nicht erforderlich und außerdem kann die Nachrüstung auf das neue Brauchwasser-Zirkulationssystem leicht allein im Heizraum durchgeführt werden.

Nach einer vorteilhaften Ausgestaltung kann das Brauchwasser-Zirkulationssystem so ausgelegt werden, dass die Zeit für die Einschaltung der Zirkulationspumpe in Abhängigkeit der Länge der Vorlaufleitung von der Heizraumgrenze bis zum ersten Verbraucher gewählt ist, um die Zirkulationspumpe nur so lange einzuschalten, wie unbedingt erforderlich ist, um die sofortige Warmwasserabgabe an jedem Verbraucher sicherzustellen.

Von Vorteil ist auch eine Ausgestaltung, die dadurch gekennzeichnet ist, dass die Nachheizung des Brauchwasserspeichers zeit- und/oder temperaturabhängig gesteuert und/oder geregelt ist, so dass der Komfort nur in vorgebbaren Zeiten geboten wird, was weitere Energieeinsparung zur Folge hat.

Die Nachrüstung eines installierten Brauchwasser-Zirkulationssystems wird dadurch vereinfacht, dass eine Zirkulationspumpe mit Steuerschaltung verwendet ist, dass der Strömungswächter mit der Zirkulationspumpe als Baueinheit verbunden ist und dass das Ansprechsignal des Strömungswächters direkt der Steuerschaltung zuführbar ist und dort in die vorgegebene Einschaltzeit umsetzbar ist.

Dabei kann zudem vorgesehen sein, dass die Zirkulationspumpe mit Anschlüssen zum ersten Anschluss des Brauchwasser-Kreislaufes und eines Anschlusses des Strömungswächters versehen ist und dass an den anderen Anschluss des Strömungswächters der zweite Anschluss des Brauchwasser-Kreislaufes anschließbar ist.

Diese Baueinheit ist dann einfach in den Brauchwasser-Kreislauf einzubauen, insbesondere auch bei einer Nachrüstung, wenn vorgesehen ist, dass die Baueinheit aus Zirkulationspumpe, Strömungswächter und Steuerschaltung als Austauscheinheit für eine Zirkulationspumpe eines herkömmlichen Brauchwasser-Kreislaufes ausgebildet ist. Dabei ist die bereits vorhandene Stromversorgung für die Steuerschaltung und die Zirkulationspumpe verwendbar.

### Zeichnung

Die Erfindung wird anhand eines Ausführungsbeispiels näher erläutert. Es zeigen:
- Fig. 1: den grundsätzlichen Aufbau eines Brauchwasser-Zirkualtionssystems und
- Fig. 2: eine Austauscheinheit für die Zirkulationspumpe des Brauchwasser-Zirkulationssystems nach Fig. 1.

### Ausführungsbeispiel

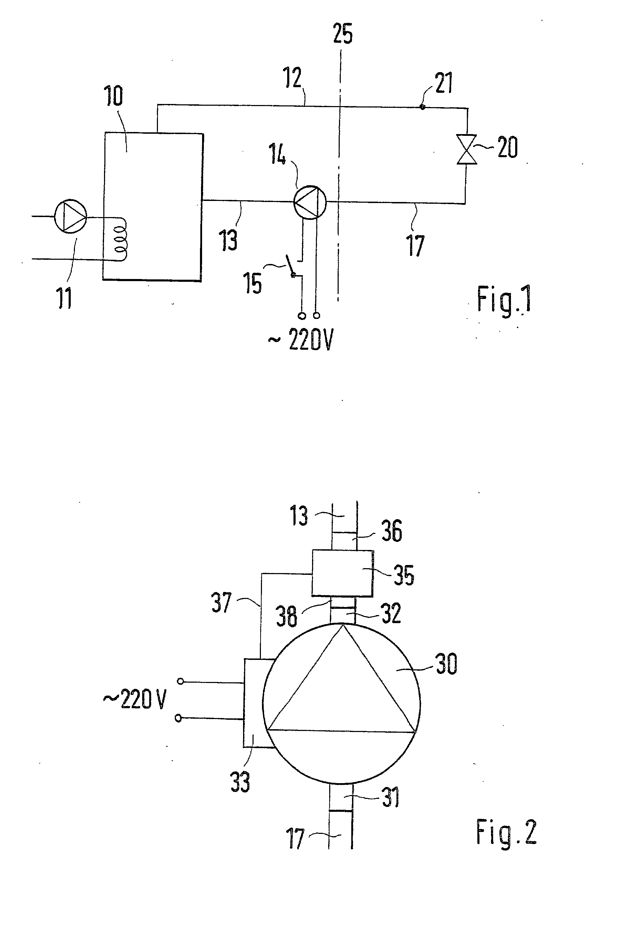

Das in Fig. 1 gezeigte Brauchwasser-Zirkulationssystem weist einen Brauchwasserspeicher 10 auf, der über einen Nachheizungskreis 11 aufgeheizt wird. Das dem Brauchwasserspeicher 10 entnommene Brauchwasser wird über die Vorlaufleitung 12 den Verbrauchern 20 zugeführt, über die Rücklaufleitung 17 und eine Zirkulationsumpe 14 ist der Brauchwasserkreis über die Leitung 13 zum Bruachwasserspeicher 10 geschlossen. Der Zirkulationspumpe 14 ist bei bekannten Brauchwasser-Zirkulationssystemen eine Schaltuhr zugeordnet, von der nur der die Zirkulationspumpe 14 schaltende Kontakt 15 gezeigt ist.

Mit 25 ist die Grenze des Heizraumes dargestellt und mit dem Punkt 21 ist der Eingang zum ersten Verbraucher 20 markiert. Der Nachteil dieses Brauchwasser-Zirkulationssystems ist, dass in der Vorlaufleitung 12 bis zum Punkt 21 in der Regel kaltes Brauchwasser ansteht, das bei einer Entnahme an beliebiger Stelle erst abfließen muss, ehe das auf die gewünschte Temeperatur aufgeheizte Brauchwasser zur Verfügung steht.

Die Zirkulationspumpe 14 kann auch über einen Strömungswächter eingeschaltet werden, über den die Abnahme von Brauchwasser registriert wird. Zu Beginn des Abnahmevorganges steht dennoch kein ausreichend aufgeheiztes Brauchwasser am Verbraucher zur Verfügung.

Um diesen Nachteil zu vermeiden, wird eine Zirkulationspumpe 30 nach Fig. 2 in die Rücklaufleitung 17 und die Leitung 13 zum Brauchwasserspeicher 10 eingeschleift. Diese Zirkulationspumpe 30 weist eine Steuerschaltung 33 auf, die ein Steuersignal 37 von einem Strömungswächter 35 erhält, der mit der Zirkulationspumpe 30 eine Baueinheit bildet, wie mit den Anschluss-Stutzen 32 und 38 angedeutet ist. An die Anschlüsse 31 und 36 sind die Rücklaufleitung 17 und die Leitung 13 zum Brauchwasserspeicher 10 angeschlossen.

Wird nun kurz vor der eigentlichen Brauchwasserentnahme an einem Verbraucher 20 kurzzeitig Brauchwasser entnommen, dann spricht der Strömungswächter 35 an und gibt das Steuersignal 37 an die Steuerschaltung 33, so dass diese für eine vorgegebene Einschaltdauer die Zirkulationspumpe 30 in Betrieb setzt. Das Brauchwasser wird umgewälzt, so dass an allen Verbrauchern 20 kurz danach auf die gewünschte Temperatur aufgeheiztes Brauchwasser zur Abnahme bereitsteht. Die vorgegebene Einschaltdauer ist auf die Länge vom Brauchwasserspeicher 10 bis zum Punkt 21 abgestimmt, so dass dieser kritische Abschnitt sicher umgewälzt ist.

Die Zirkulationspumpe 30 mit dem Strömungswächter 35 kann als Austauscheinheit eine Zirkulationspumpe 14 in herkömmlichen Brauchwasser-Zirkulationssystemen ersetzen. Eine Fernsteuerung der Zirkulationspumpe 30 ohne Leitungen ist damit von allen Verbrauchern 20 aus möglich und die Vorbereitung auf die Entnahme von richtig aufgeheiztem Brauchwasser sichergestellt.

## Patentansprüche

1. Brauchwasser-Zirkulationssystem, bei dem ein mit einer Nachheizung versehener Brauchwasserspeicher über eine Vorlaufleitung eine Anzahl von Warmwasser-Verbraucher mit Warmwasser versorgt, das über eine Rücklaufleitung und eine Zirkulationspumpe zum Brauchwasserspeicher zurück in Umwälzung bringbar ist, wobei die Zirkulationspumpe mittels eines in den Brauchwasser-Kreislauf einbezogenen Strömungswächters ansteuerbar ist,
**dadurch gekennzeichnet,**
**dass** durch kurzzeitige Warmwasserentnahme eines beliebigen Verbrauchers (20) der Strömungswächter (35) anspricht und für eine fest vorgegebene oder einstellbare Zeit die Einschaltung der Zirkulationspumpe (14, 30) veranlasst.

2. Brauchwasser-Zirkulationssystem nach Anspruch 1,
**dadurch gekennzeichnet,**
**dass** die Zeit für die Einschaltung der Zirkulationspumpe (14, 30) in Abhängigkeit der Länge der Vorlaufleitung (12) von der Heizraumgrenze (25) bis zum ersten Verbraucher (20) gewählt ist.

3. Brauchwasser-Zirkulationssystem nach Anspruch 1 oder 2,
**dadurch gekennzeichnet,**
**dass** die Nachheizung des Brauchwasserspeichers (10) zeit- und/oder temperaturabhängig gesteuert und/oder geregelt ist.

4. Brauchwasser-Zirkulationssystem nach einem der Ansprüche 1 bis 3,
**dadurch gekennzeichnet,**
**dass** eine Zirkulationspumpe (30) mit Steuerschaltung (33) verwendet ist, dass der Strömungswächter (35) mit der Zirkulationspumpe (35) als Baueinheit verbunden ist und
**dass** das Ansprechsignal (37) des Strömungswächters (35) direkt der Steuerschaltung (33) zuführbar ist und dort in die vorgegebene Einschaltzeit umsetzbar ist.

5. Brauchwasser-Zirkulationssystem nach Anspruch 4,
**dadurch gekennzeichnet,**
**dass** die Zirkulationspumpe (30) mit Anschlüssen (31, 32) zum ersten Anschluss (17) des Brauchwasser-Kreislaufes und eines Anschlusses (38) des Strömungswächters (35) versehen ist und
**dass** an den anderen Anschluss (36) des Strömungswächters (35) der zweite Anschluss (13) des Brauchwasser-Kreislaufes anschließbar ist.

6. Brauchwasser-Zirkulationssystem nach einem der Ansprüche 2 bis 5,
**dadurch gekennzeichnet,**
**dass** die Baueinheit aus Zirkulationspumpe (30), Strömungswächter (35) und Steuerschaltung (33) als Austauscheinheit für eine Zirkulationspumpe (14) eines herkömmlichen Brauchwasser-Kreislaufes ausgebildet ist.
